(19) Europäisches Patentamt
European Patent Office
Office européen des brevets

(11) EP 1 201 126 B1

(12) EUROPÄISCHE PATENTSCHRIFT

(45) Veröffentlichungstag und Bekanntmachung des Hinweises auf die Patenterteilung:
**06.04.2005 Patentblatt 2005/14**

(51) Int Cl.[7]: **A01N 43/40**
// (A01N43/40, 47:04, 43:54, 43:40, 43:36, 37:32)

(21) Anmeldenummer: **01129795.9**

(22) Anmeldetag: **15.12.1998**

# (54) Fungizide Mischungen auf der Basis von Pyridincarboxamidverbindungen

Fungicidal mixtures based on pyridine carboxamide compounds

Mélanges fongicides à base de composés pyridine carboxamide

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1997 DE 19756379**

(43) Veröffentlichungstag der Anmeldung:
**02.05.2002 Patentblatt 2002/18**

(62) Dokumentnummer(n) der früheren Anmeldung(en) nach Art. 76 EPÜ:
**98966623.5 / 1 039 803**

(73) Patentinhaber: **BASF AKTIENGESELLSCHAFT**
**67056 Ludwigshafen (DE)**

(72) Erfinder:
- **Schelberger, Klaus**
  **67161 Gönnheim (DE)**
- **Scherer, Maria**
  **76829 Landau (DE)**
- **Eicken, Karl, Dr.**
  **67157 Wachenheim (DE)**
- **Hampel, Manfred, Dr.**
  **67435 Neustadt (DE)**
- **Ammermann, Eberhard, Dr.**
  **64646 Heppenheim (DE)**
- **Lorenz, Gisela, Dr.**
  **67434 Hambach Hambach (DE)**
- **Strathmann, Siegfried, Dr.**
  **67117 Limburgerhof (DE)**

(74) Vertreter: **Pohl, Michael, Dr.**
**Reitstötter, Kinzebach & Partner (GbR)**
**Patentanwälte**
**Postfach 21 11 60**
**67011 Ludwigshafen (DE)**

(56) Entgegenhaltungen:

**EP-A- 0 256 503**
**EP-A- 0 276 666**
**EP-A- 0 545 099**
**WO-A-95/35033**
**WO-A-97/10716**
**WO-A-97/39628**
**DE-A- 2 514 460**

- **DATABASE CHEMABS [Online] CHEMICAL ABSTRACTS SERVICE, COLUMBUS, OHIO, US; retrieved from STN-INTERNATIONAL, accession no. 113:206716 CA XP002192395 & JP 02 196701 A (NISSAN CHEMICAL INDUSTRIES) 3. August 1990 (1990-08-03)**

EP 1 201 126 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft fungizide Mischungen zur Bekämpfung von Schadpilzen, die

a) Amidverbindungen der Formel I

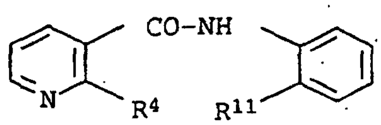

(I)

worin

$R^4$ für Halogen steht und
$R^{11}$ für Phenyl steht, das durch Halogen substituiert ist

und

b) ein Phthalimidderivat ausgewählt aus der Gruppe der Verbindungen IIa, IIb und III

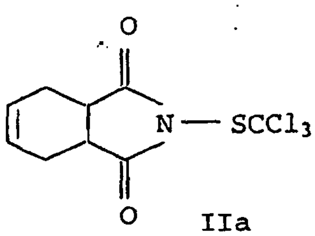

IIa

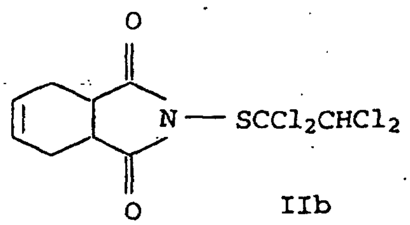

IIb

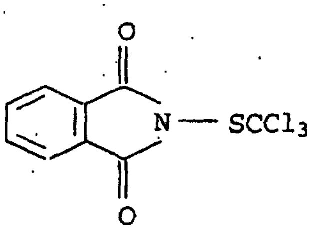

III

und/oder

c) ein Arylsulfamid der Formeln IVa oder IVb

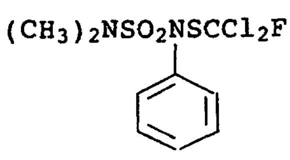

IVa

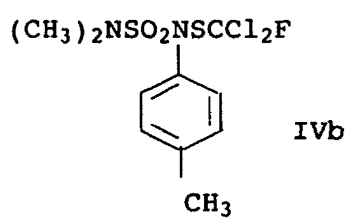

IVb

in einer synergistisch wirksamen Menge enthalten.

In der WO 97/08952 werden fungizide Mischungen beschrieben, die neben Amidverbindungen noch Fenazaquin als weitere Komponenten enthalten. Diese werden als gut wirksam gegen Botrytis beschrieben.

Die Amidverbindungen der Formel I sind an sich bekannt und in der Literatur beschrieben (EP-A 545 099).

Die US-A 2, 553, 770; 2,553,771; 2, 553, 776 beschreiben die Verbindungen IIa (common name :captan) und III (common name: folpet), deren Herstellung und deren Wirkung gegen Schadpilze. Die Verbindung IIb (common name:captafol) ist in Phytopathology 52(1962), 52, 754 beschrieben.

Die Verbindungen IVa und IVb sind unter den common names Dichlofluanid bzw. Tolylfluanid bekannt und im deutschen Patent 1193498 beschrieben

Im Hinblick auf eine Senkung der Aufwandmengen und eine Verbesserung des Wirkungsspektrums der bekannten Verbindungen lagen der vorliegenden Erfindung Mischungen zugrunde, die bei verringerter Gesamtmenge an ausgebrachten Wirkstoffen eine verbesserte Wirkung gegen Schadpilze aufweisen (synergistische Mischungen).

Demgemäß wurden die eingangs definierten Mischungen gefunden.
Es wurde außerdem gefunden, daß sich bei gleichzeitiger, und zwar gemeinsamer oder getrennter Anwendung der Verbindungen I und der Verbindungen II bis IVb oder bei Anwendung der Verbindungen I und der Verbindungen II bis IVb nacheinander Schadpilze besser bekämpfen lassen, als mit den Verbindungen I oder II bis IVb allein.

Die erfindungsgemäßen Mischungen wirken synergistisch und sind daher zur Bekämpfung von Schadpilzen und insbesondere von Botrytis-Spezies besonders geeignet.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte $C_1$-$C_{12}$-Alkyl- und insbesondere $C_1$-$C_6$-Alkylgruppen. Beispiele für Alkylgruppen sind Alkyl wie insbesondere Methyl, Ethyl, Propyl, 1-Methylethyl, Butyl, 1-Methylpropyl, 2-Methyl- .. propyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Brauchbare Amidverbindungen der Formel I sind in der EP-A-545 099 und 589 301, auf die hiermit in vollem Umfang Bezug genommen wird, genannt.

Die Herstellung der Amidverbindungen der Formel I ist beispielsweise aus der EP-A-545 099 oder 589 301 bekannt oder kann nach analogen Verfahren erfolgen.

Um die synergistische Wirkung zu entfalten, genügt bereits ein geringer Anteil an Amidverbindung der Formel I. Vorzugsweise werden Amidverbindung und Wirkstoff der Formel II und/oder III bis IVb in einem Gewichtsverhältnis im Bereich von 50:1 bis 1:50, insbesondere 10:1 bis 1:10 eingesetzt. Dabei ist es auch möglich, ternäre Mischungen zu verwenden, die neben Amidverbindungen I sowohl Verbindungen II als auch eine oder mehrere Verbindungen III bis IVb enthalten. In derartigen Mischungen liegt das Mischungsverhältnis der Verbindungen II und III bis IVb untereinander in der Regel im Bereich von 50:1 bis 1:50, vorzugsweise 10:1 bis 1:10.

Bevorzugt setzt man bei der Bereitstellung der Mischungen die reinen Wirkstoffe I und II bis IVb ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II und/oder III bis IVb bzw. die Verbindungen I und II und/oder III bis IVb gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blattund Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinerea (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Besonders bevorzugt sind die erfindungsgemäßen Mischungen zur Bekämpfung von Botrytis-Spezies in Reben- und Gemüsekulturen sowie in Zierpflanzen einsetzbar.

Die Verbindungen I und II und/oder III bis IVb können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5_kg/ha, insbesondere 0,2 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II und/oder III bis IVb liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II und/oder III bis IVb oder der Mischungen aus den Verbindungen I und II und/oder III bis IVb durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II und/oder III bis IVb können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, .Ammoniumsalze von aromatischen Sulfonsäuren, z.B. Lignin-, , Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder IVb Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylenalkylether, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II und/oder III bis IVb oder der Mischung aus den Verbindungen I und II und/oder III bis IVb mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II und/oder III bis IVb bzw. der Mischung aus den Verbindungen I und II und/oder III bis IVb. Die Wirkstoffe werden dabei in einer Reinheit von 90% bis 100%, vorzugsweise 95% bis 100% (nach NMR-Spektrum oder HPLC) eingesetzt.

Die Anwendung der Verbindungen I und II und/oder III bis IVb der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II und/oder III bis IVb bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII.eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (W) wird nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1 - Wirksamkeit gegen Botrytis cinerea an Paprikablättern

Paprikasämlinge der Sorte "Neusiedler Ideal Elite" wurden, nachdem sich 4 - 5 Blätter gut entwickelt hatten, mit einer wäßrigen Wirkstoffaufbereitung, die aus einer Stammlösung aus 10 % Wirkstoff, 63 % Cyclohexanon und 27 % Emulgiermittel angesetzt wurde, bis zur Tropfnässe besprüht. Am nächsten Tag wurden die behandelten Pflanzen mit einer Sporensuspension von Botrytis cinerea, die 1.7 x $10^6$ Sporen/ml in einer 2 %igen wäßrigen Biomalzlösung enthielt, inokuliert. Anschließend wurden die Versuchspflanzen in eine Klimakammer mit 22 bis 24°C und hoher Luftfeuchtigkeit gestellt. Nach 5 Tagen konnte das Ausmaß des Pilzbefalls auf den Blättern visuell in % ermittelt werden.
Als Verbindungen der Formel I wurden folgende Komponenten eingesetzt:

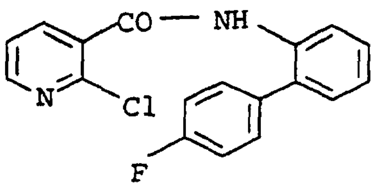

I.1

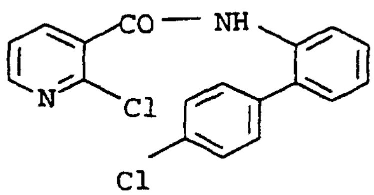

I.2

Die Ergebnisse sind den nachfolgenden Tabellen 1 und 2 zu entnehmen.

Tabelle 1

| Bsp. | Wirkstoff | Wirkstoffkonzentration in der Spritzbrühe in ppm | Wirkungsgrad in % der unbehandelten Kontrolle |
|---|---|---|---|
| 1V | unbehandelt | 0 (99 % Befall) | 0 |
| 2V | Verbindung I.1 | 31<br>16<br>8 | 78<br>67<br>11 |
| 3V | Verbindung I.2 | 31<br>16<br>8 | 67<br>44<br>44 |
| 4V | Verbindung IIa | 31<br>16<br>8 | 0<br>0<br>0 |
| 5V | Verbindung III | 31<br>16<br>8 | 0<br>0<br>0 |
| 6V | Verbindung IVa | 31<br>16<br>8 | 0<br>0<br>0 |

Tabelle 2

| Bsp. | erfindungsgemäße Mischungen (Gehalt in ppm) | beobachteter Wirkungsgrad | berechneter Wirkungsgrad *) |
|---|---|---|---|
| 7 | 31 ppm I.1 + 31 ppm IIa | 97 | 78 |
| 8 | 8 ppm I.1 + 8 ppm IIa | 30 | 11 |
| 9 | 31 ppm I.2 + 31 ppm IIa | 100 | 67 |
| 10 | 16 ppm I.2 + 16 ppm IIa | 70 | 44 |
| 11 | 31 ppm I.1 + 31 ppm III | 90 | 78 |
| 12 | 8 ppm I.1 + 8 ppm III | 39 | 11 |
| 13 | 31 ppm I.2 + 31 ppm III | 93 | 67 |
| 14 | 16 ppm I.2 + 16 ppm III | 90 | 44 |
| 15 | 8 ppm I.2 + 8 ppm III | 90 | 44 |
| 16 | 31 ppm I.1 + 31 ppm IVa | 95 | 78 |
| 17 | 16 ppm I.1 + 16 ppm IVa | 90 | 67 |
| 18 | 31 ppm I.2 + 31 ppm IVa | 100 | 67 |
| 19 | 16 ppm I.2 + 16 ppm IVa | 99 | 44 |
| 20 | 8 ppm I.2 + 8 ppm IVa | 90 | 44 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad

Anwendungsbeispiel 2 - Wirksamkeit gegen Botrytis cinerea an Paprikaschoten

Scheiben von grünen Paprikaschoten wurden mit einer wäßrigen Wirkstoffaufbereitung, die aus einer Stammlösung aus 10 % Wirkstoff, 63 % Cyclohexanon und 27 % Emulgiermittel angesetzt wurde, tropfnaß besprüht. 2 Stunden nach dem Antrocknen des Spritzbelages wurden die Fruchtscheiben mit einer Sporensuspension von Botrytis cinerea, die 1,7 x $10^6$ Sporen pro ml einer 2 %igen Biomalzlösung enthielt, inokuliert. Die inokulierten Fruchtscheiben wurden anschließend in feuchten Kammern bei 18°C für 4 Tage inkubiert. Dann erfolgte visuell die Auswertung des Botrytis-Befalls auf den befallenen Fruchtscheiben.

Die Ergebnisse sind den nachfolgenden Tabellen 3 und 4 zu entnehmein.

Tabelle 3

| Bsp. | Wirkstoff | Wirkstoffkonzentration in der Spritzbrühe in ppm | Wirkungsgrad in % der unbehandelten Kontrolle |
|---|---|---|---|
| 21V | unbehandelt | 0 (100 % Befall) | 0 |
| 22V | Verbindung I.1 | 31<br>16 | 0<br>0 |
| 23V | Verbindung I.2 | 31<br>16 | 20<br>0 |
| 24V | Verbindung IIa | 31 | 0 |
| 25V | Verbindung III | 31 | 0 |

Tabelle 4

| Bsp. | erfindungsgemäße Mischungen (Gehalt in ppm) | beobachteter Wirkungsgrad | berechneter Wirkungsgrad*) |
|---|---|---|---|
| 28 | 31 ppm I.2<br>+<br>31 ppm IIa | 50 | 20 |
| 29 | 31 ppm I.2<br>+<br>31 ppm III | 40 | 20 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad

## Patentansprüche

**1.** Fungizide Mischungen, enthaltend als aktive Komponenten

a) eine Amidverbindung der Formel I

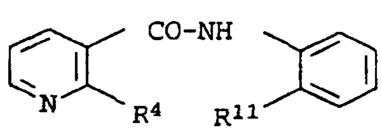

(I)

worin

$R^4$ für Halogen steht und

$R^{11}$ für Phenyl steht, das durch Halogen substituiert ist

und

b) ein Phthalimidderivat ausgewählt aus der Gruppe der Verbindungen IIa, IIb und III

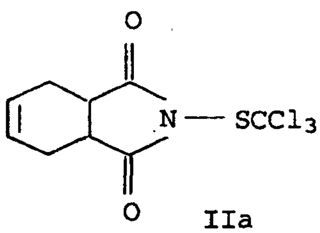

IIa

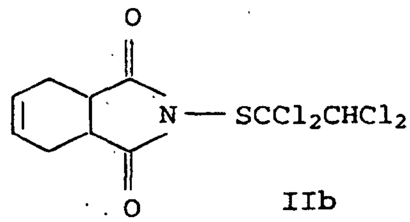

IIb

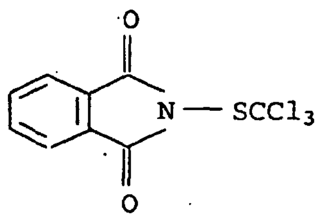

III

und/oder

c) ein Arylsulfamid der Formeln IVa oder IVb

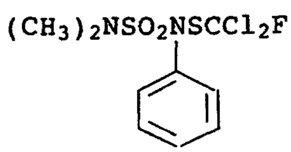

IVa

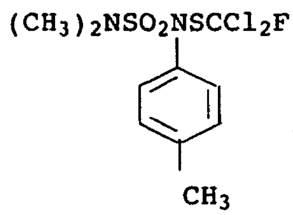

IVb

in einer synergistisch wirksamen Menge.

**2.** Fungizide Mischung nach Anspruch 1, welche als Amidverbindung eine Verbindung der nachfolgenden Formeln enthält:

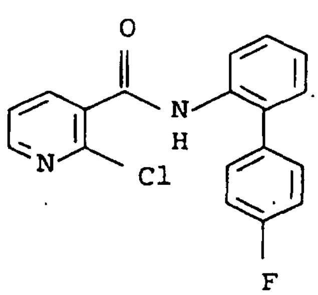

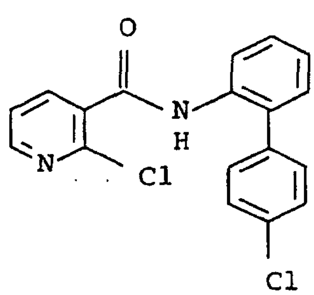

**3.** Fungizide Mischung nach einem der vorhergehenden Ansprüche, welche in zwei Teilen konditioniert ist, wobei

der eine Teil die Amidverbindung I in einem festen oder flüssigen Träger enthält und der andere Teil eine oder mehrere Verbindungen der Formeln IIa bis IVb in einem festen oder flüssigen Träger enthält.

**4.** Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden, Flächen oder Räume mit einer fungiziden Mischung gemäß einem der Ansprüche 1 oder 2 behandelt, wobei die Anwendung der Wirkstoffe Amidverbindung I und einer oder mehrerer Verbindungen der Formeln IIa bis IVb gleichzeitig, und zwar gemeinsam oder getrennt, oder nacheinander erfolgen kann.

**Claims**

**1.** A fungicidal mixture, comprising as active components

a) an amide compound of the formula I

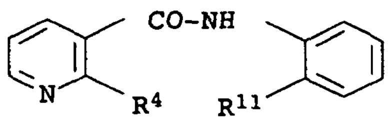

(I)

in which

R4 is halogen and
$R^{11}$ is phenyl which is substituted by halogen,

and

b) a phthalimide derivative selected from the group of the compounds IIa, IIb and III

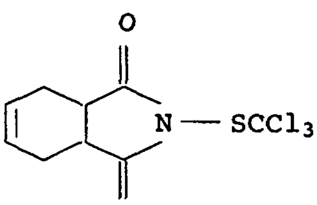

IIa

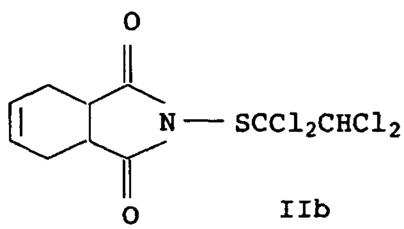

IIb

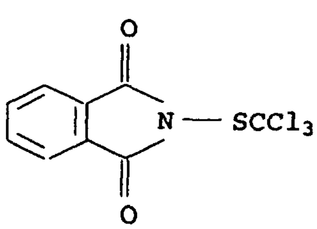

III

and/or

c) an arylsulfamide of the formula IVa or IVb

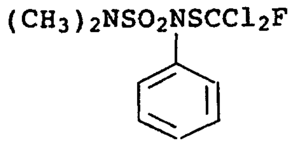

IVa

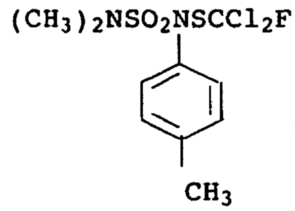

IVb

in a synergistically effective amount.

**2.** A fungicidal mixture as claimed in claim 1, which comprises as amide compound a compound of the formulae below:

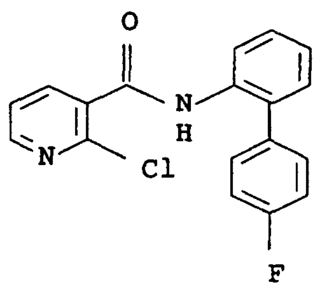

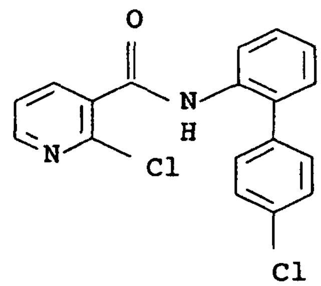

**3.** A fungicidal mixture as claimed in any of the preceding claims, which is conditioned in two parts, one part comprising the amide compound I in a solid or liquid carrier and the other part comprising one or more compounds of the formulae IIa to IVb in a solid or liquid carrier.

**4.** A method for controlling harmful fungi, which comprises treating the fungi, their habitat, or the materials, plants, seeds, soils, areas or spaces to be protected against fungal attack with a fungicidal mixture as claimed in either of claims 1 and 2, where the application of the active ingredients amide compound I and one or more compounds of the formulae IIa to IVb may be carried out simultaneously, that is either together or separately, or in succession.

## Revendications

**1.** Mélanges fongicides, contenant en tant que composants actifs

a) un composé de type amide de formule I

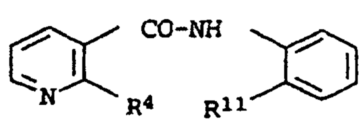

(I)

dans laquelle

$R^4$ représente un atome d'halogène et
$R^{11}$ représente un groupe phényle qui est substitué par un halogène

et

b) un dérivé de type phtalimide, choisi dans le groupe des composés IIa, IIb et III

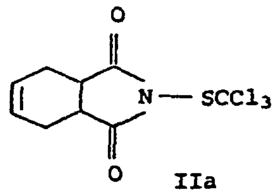

IIa

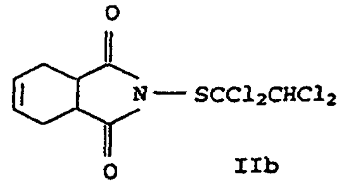

IIb

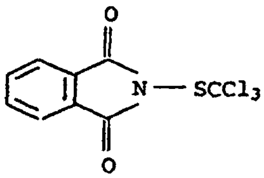

III

et/ou

c) un arylsulfamide de formule IVa ou IVb

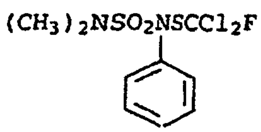

IVa

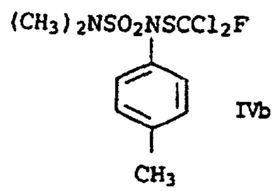

IVb

en une quantité efficace à effet synergique.

2. Mélange fongicide selon la revendication 1, qui contient en tant que composé de type amide un composé de formules suivantes :

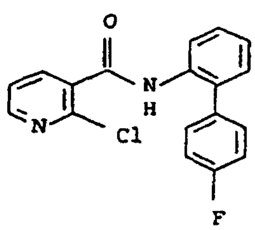

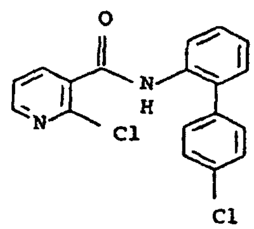

3. Mélange fongicide selon l'une quelconque des revendications précédentes, qui est conditionné en deux parties, une partie contenant le composé de type amide I dans un support solide ou liquide et l'autre partie contenant un ou plusieurs composés de formules IIa à IVb dans un support solide ou liquide.

4. Procédé pour la lutte contre des champignons nuisibles, **caractérisé en ce qu'**on traite par un mélange fongicide selon la revendication 1 ou 2 les champignons, leur habitat ou les matériaux, plantes, graines, sols, surfaces ou espaces à protéger contre l'attaque de champignons, l'utilisation des principes actifs composé de type amide I et d'un ou plusieurs composés de formules IIa à IVb pouvant s'effectuer simultanément, à savoir conjointement ou séparément, ou bien successivement.